# EUROPEAN PATENT APPLICATION

(11) **EP 3 527 822 A1**
(43) Date of publication of application: **21.08.2019**
(21) Application number: 18382086.9
(22) Date of filing: 15.02.2018
(51) Int. Cl.: F03D 80/80, F03D 80/00, F03D 13/20

(54) **DEVICE FOR FASTENING INTERNAL COMPONENTS TO AN INTERIOR WALL IN A TOWER OF A WIND GENERATOR**

(71) Applicant: GRI Renewable Industries, S.L., 28045 Madrid (ES)
(72) Inventor: GALLARDO HERNÁNDEZ, Rodrigo, 28045 MADRID (ES)
(74) Representative: Ungria López, Javier

(57) **Abstract**

The object of the invention is a device for fastening internal components (3) to an interior wall in a tower of a wind generator comprising a fastening piece (1), which in turn comprises a first plate (4) and a second plate (5), which forms an angle with respect to the first plate (4), which is comprised within the range of 60° to 120°, and an adhesive product (2) located on the first plate (4) opposite the second plate (5), such that the adhesive product (2) is configured to fasten the fastening piece (1) to the interior wall of the tower by means of the first plate (4) and wherein the second plate (5) offers an articulation for internal components (3).

## Description

### Object of the invention

The present invention relates to a device for fastening internal components to an interior wall in a tower of a wind generator, with technical characteristics that enable the internal components to be fastened in the tower without weakening the tower structure, while maintaining the capacity thereof to support the internal components of the tower of a wind generator. The device object of the invention is applicable in the metal structure construction industry, specifically in the construction of towers for wind generators.

### Technical problem to be solved and background of the invention

The towers that support a wind turbine are hollow towers that house a large number of internal components such as control elements of the turbine and elements for accessing the turbine itself from the interior of the hollow tower, such as stairs, landings between stairs, handrails and other supporting elements.

Currently, the most common solution used for incorporating these internal components to the interior of the main structure of the tower of a wind generator is using welding to directly fasten said internal components to the interior wall of the main structure.

The use of welding generates a weak area in the mentioned main structure of the tower, mainly under fatigue load, as it has been calculated, it reduces resistance thereof by approximately 11% from detail category 90 (DC90) to detail category 80 (DC80) according to the Eurocode and the International Institute of Welding (IIW).

In order to avoid the weak areas of the main structure, elements are used that increase the building cost of the tower, making it therefore necessary to look for some way of being able to fasten said elements without weakening the tower.

The applicant is aware of document US 7 735 289 B2, which discloses a way of fastening the internal components to the interior wall by means of a first magnetic fastening element that fastens to the wall and a mechanical element, which is fastened to the magnetic fastening element with a coupling means that provides a degree of freedom, such that the coupling means absorbs possible stresses as a result of the degree of freedom, thus preventing the magnetic fastening means from being subjected to stresses that separate said fastening means from the interior wall.

However, the state of the art does not know of any device such as the one recommended in this specification, in which with a same element fastened to the interior wall of a tower of a wind turbine, by means of an adhesive, any internal component can be permanently fastened to the aforementioned interior wall of the tower of a wind generator.

### Description of the invention

The present invention relates to a new device for fastening internal components in a tower of a wind generator, which carries out the fastening of a fastening piece with a specific design to an interior wall of the generator tower by means of an adhesive product distributed between the fastening piece and the interior wall of the tower.

The device for fastening internal components to an interior wall in a tower of a wind generator object of the invention comprises a fastening piece, which in turn comprises a first plate and a second plate, and further comprises an adhesive product arranged on the first plate but on the face of the first plate that is opposite where the second plate is located.

The second plate forms an angle with respect to the first plate, which is comprised in the range of 60° to 120°, in order to absorb, if necessary, the deviation produced by fastening an internal component to a circular wall and, if the internal component has two parallel components, the device object of the invention makes it possible to fasten them in parallel.

The adhesive product of the device object of the invention is configured to fasten the fastening piece to the interior wall of the tower by means of the first plate.

The second plate offers an articulation for the internal components, such that the aforementioned second plate is where the internal components are fastened.

In an embodiment of the device for fastening internal components to an interior wall in a tower of a wind generator object of the invention, the first plate has a curved external shape, said curved external shape being an ellipse in one embodiment of the device.

In another embodiment of the device for fastening internal components to an interior wall in a tower of a wind generator object of the invention, the first plate comprises two straight sides and two curved sides.

In the device for fastening internal components to an interior wall in a tower of a wind generator object of the invention, the second plate has a rectangular shape with rounded vertices.

In the device for fastening internal components to an interior wall in a tower of a wind generator object of the invention, the first plate and the second plate come together in a straight joint.

The straight joint of the two plates, when the first plate has at least one straight side, is arranged in a direction parallel to at least the mentioned straight side of the first plate.

In the device for fastening internal components to an interior wall in a tower of a wind generator object of the invention, the second plate comprises an orifice configured to fasten an internal component, wherein the orifice configures the articulation.

In the device for fastening internal components to an interior wall in a tower of a wind generator object of the invention, the second plate is shorter in length than the larger dimension of the first plate.

### Description of the figures

To complete the description, and for the purpose of helping to make the characteristics of the invention more readily understandable, the present specification is accompanied by a set of figures constituting an integral part thereof, which by way of illustration and not limitation represent the following:

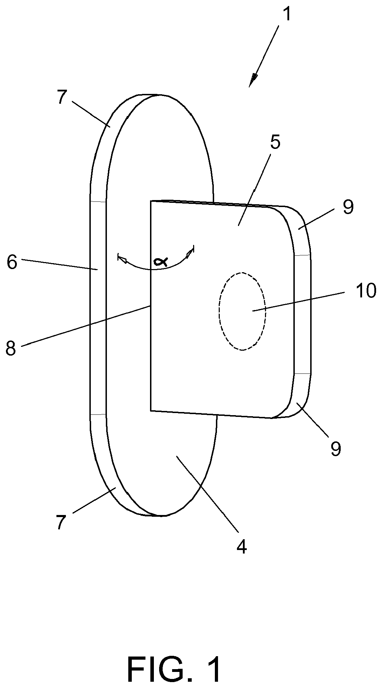

Figure 1 shows a perspective view of the fastening piece of the device object of the invention.

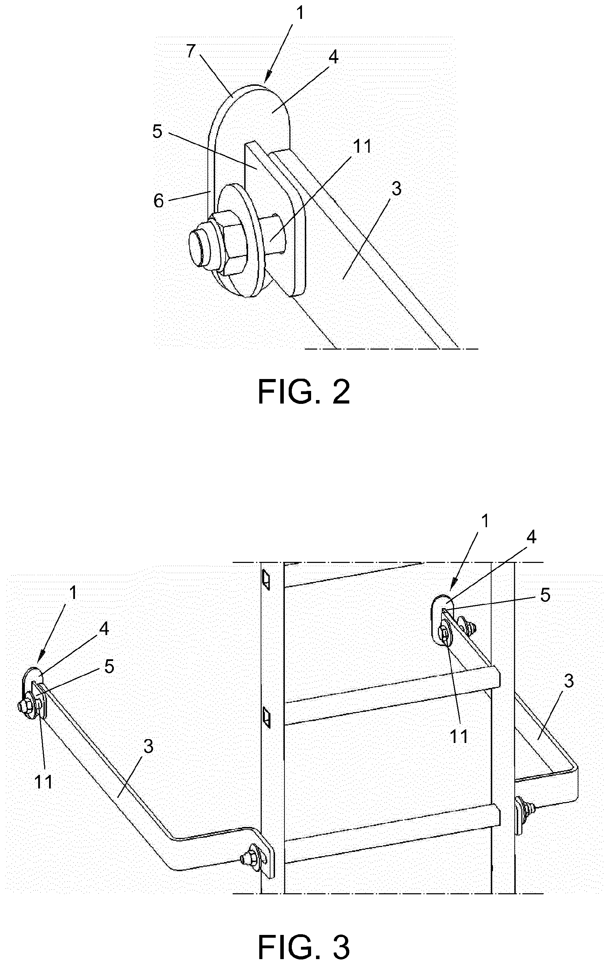

Figure 2 shows a perspective view of a fastening piece with one end of an internal element fastened thereto.
Figure 3 shows a perspective view of a part of an internal element fastened with two fastening pieces inside a tower of a wind generator.

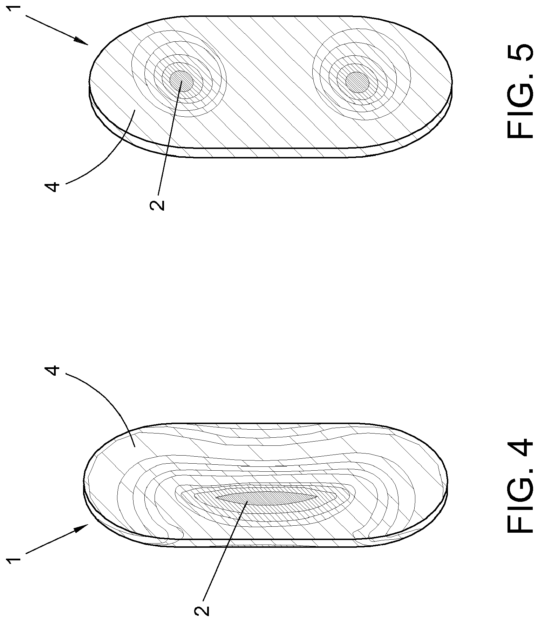

Figure 4 shows a view of the fastening piece with shadings that indicate the different intensity of the stresses endured by the adhesive when it is subjected to stresses along an axis perpendicular to the fastening piece.
Figure 5 shows a view of the fastening piece with shadings that indicate the different intensity of the stresses endured by the adhesive when it is subjected to stresses along an axis parallel and longitudinal to the fastening piece.

The following is a list of the different elements shown in the figures that are included in the invention, together with the reference numbers used in the figures:
1.- fastening piece,
2.- adhesive product,
3.- internal component
4.- first plate,
5.- second plate,
6.- straight side,
7.- curved side,
8.- straight joint,
9.- vertex,
10.- orifice,
11.- roll pin,
α.- angle between the first plate and the second plate.

### Detailed description of an embodiment of the invention

The device for fastening internal components (3) to an interior wall in a tower of a wind generator object of the invention comprises a fastening piece (1) and an adhesive product (2) between the fastening piece (1) and the interior wall of the tower, such that the fastening piece (1) is fastened to the interior wall by means of an adhesive product (2).

The fastening piece (1) of the device object of the invention comprises a first plate (4) and a second plate (5) fastened to the first plate (4) on one face thereof.

Since the device object of the invention has been developed for the interior of a tower of a wind generator and this type of tower has a cylindrical configuration, in other words, a circular cross section, the interior element, when formed by two components, makes it so that these two components are located parallel to each other, the second plate (5) is inclined perpendicular to the first plate (4), at an angle that is around 2-3°, although in an extreme case, the aforementioned inclination of the second plate (5) perpendicular to the first plate (4) may reach 30°, in other words, the second plate (5) forms an angle (α) with the first plate (4) that ranges between 60° and 120°.

In the device object of the invention, the adhesive product (2) is located on one face of the first plate (4) opposite where the second plate (5) is located; therefore, once the first plate (4) has been fastened to the interior wall of the tower, the second plate (5) protrudes.

The geometry of the first plate (4) is obtained from the study of the structural behavior of the joint between the first plate (4) and the interior wall. Thus, the first plate (4) can have different geometries. In the preferred embodiment of the invention, the first plate (4) has two straight sides (6) and two curved sides (7) that join the straight sides (6) together, the straight sides (6) in the preferred embodiment of the invention being parallel to each other. This geometry is the geometry of the first plate (4) that optimizes the material used to manufacture the first plate (4). However, the first plate (4) can also have any curved shape and, among the curved shapes, the preferred shape is the elliptical shape.

The shape of the first plate (4) prevents a concentration of stresses due to peaks in the geometry of the first plate (4) itself in those positions of the first plate (4) where, given the stresses that it receives from the internal components (3), it can result in the beginning of the detachment of the fastening piece (1).

The first plate (4) and the second plate (5) come together in a straight joint (8) such that the straight joint (8) of the two flat plates (4, 5) is arranged in a direction parallel to at least one straight side (6) of the first plate (4).

With regards to the geometry of the second plate (5), said second plate (5) in the preferred embodiment of the invention has a rectangular shape and vertices (9) located opposite the first plate (4) that are rounded.

The second plate (5) comprises an orifice (10) configured to serve as a fastening point for the internal component of the tower. To fasten said internal component, a roll pin or screw or bolt (11), or any element that, introduced into the orifice (10), fastens the internal component to the second plate (5), is used.

Thus, the second plate (5) offers an articulation for the internal components (3) of the tower, such that said articulation enables free rotation of the component around the articulation parallel to the second plate (5) itself.

The second plate (5), when combined with the preferred embodiment of the first plate (4), is approximately as long as the length of the straight sides (6) of the aforementioned first plate (4). The second plate (5) does not extend to the edges of the first plate (4); this dimension of the second plate (5) prevents a concentration of stresses in critical areas of detachment of the adhesive product (3) from occurring.

Finally, the adhesive product (2) that is located between the first plate (4) and the internal wall of the tower of a wind generator is a structural adhesive that can be of two types: epoxy-based adhesive or acrylic-based adhesive.

The invention must not be seen as limited to the particular embodiments described in this document. Those skilled in the art can develop other embodiments in light of the description made herein. As such, the scope of the invention is defined by the following claims.

## Claims

1. A device for fastening internal components (3) to an interior wall in a tower of a wind generator, **characterized in that** it comprises:
- a fastening piece (1), which in turn comprises a first plate (4) and a second plate (5), such that between the first plate (4) and the second plate (5) there is an angle (α) that is comprised within the range of 60° to 120°, and
- an adhesive product (2) located on the first plate (4) opposite the second plate (5),
such that the adhesive product (2) is configured to fasten the fastening piece (1) to the interior wall of the tower by means of the first plate (4) and wherein the second plate (5) offers an articulation for the internal components (3).

2. The device for fastening internal components (3) to an interior wall in a tower of a wind generator according to claim 1, **characterized in that** the first plate (4) has a curved external shape.

3. The device for fastening internal components (3) to an interior wall in a tower of a wind generator according to claim 1, **characterized in that** the curved external shape of the first plate (4) is an ellipse.

4. The device for fastening internal components (3) to an interior wall in a tower of a wind generator according to claim 1, **characterized in that** the first plate (4) comprises two straight sides (6) and two curved sides (7).

5. The device for fastening internal components (3) to an interior wall in a tower of a wind generator according to any of the preceding claims, **characterized in that** the second plate (5) has a rectangular shape with rounded vertices (9).

6. The device for fastening internal components (3) to an interior wall in a tower of a wind generator according to any of the preceding claims, **characterized in that** the first plate (4) and the second plate (5) come together in a straight joint (8).

7. The device for fastening internal components (3) to an interior wall in a tower of a wind generator according to claims 4 to 6, **characterized in that** the straight joint (8) of the two plates (4, 5) is arranged in a direction parallel to at least one straight side (6) of the first plate (4).

8. The device for fastening internal components (3) to an interior wall in a tower of a wind generator according to any of the preceding claims, **characterized in that** the second plate (5) comprises an orifice (10) configured to fasten an internal component (3), where the orifice (9) configures the articulation.

9. The device for fastening internal components (3) to an interior wall in a tower of a wind generator according to any of the preceding claims, **characterized in that** the second plate (5) is shorter in length than the larger dimension of the first plate (4).
